(19) **Europäisches Patentamt / European Patent Office / Office européen des brevets**

(11) **EP 4 686 985 A1**

(12) # EUROPEAN PATENT APPLICATION

(43) Date of publication:
**04.02.2026 Bulletin 2026/06**

(21) Application number: **24192430.7**

(22) Date of filing: **01.08.2024**

(51) International Patent Classification (IPC):
**G05B 13/04** $^{(2006.01)}$

(52) Cooperative Patent Classification (CPC):
**G05B 13/042**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventors:
- **Weissbacher, Joachim**
  **5101 Bergheim (AT)**
- **Gollner, Friedrich**
  **5142 Eggelsberg (AT)**
- **Kraft, Hans-Peter**
  **5442 Russbach (AT)**

(74) Representative: **Patentanwälte Pinter & Weiss OG**
**Prinz-Eugen-Straße 70**
**1040 Wien (AT)**

(54) **CONTROL METHOD AND CONTROL DEVICE WITH ANOMALY DETECTION**

(57)    In order to provide a method for controlling a technical system (1) by means of a Two Degree of Freedom controller (2), which allows for increased accuracy, higher robustness and better safety even in cases of changes of the technical system (1), at an anomaly detection time point ($t_w$) during control of the technical system (1), an anomaly detection signal (w) is derived, at least one control parameter ($k_p$, $k_i$, $u_{max}$) parametrizing the Two Degree of Freedom controller (2) is adapted depending on the anomaly detection signal (w) and, from the anomaly detection time point ($t_w$) onwards, the technical system (1) is controlled by means of the Two Degree of Freedom controller (2) parameterized by said at least one adapted control parameter ($k_p$, $k_j$, $u_{max}$).

Fig. 1

EP 4 686 985 A1

**Description**

Field of the invention

The present invention pertains to a method for controlling an output of a technical system to a predefined setpoint by means of a Two Degree of Freedom controller having a feedforward part providing a first control output and a feedback part providing a second control output, the Two Degree of Freedom controller being parametrized by a multiple of control parameters, the feedback part computing said second control output from a control error representative of a deviation between the output of the technical system and the predefined setpoint, a sum-control-variable acting on the technical system to control the output to the setpoint being determined from the first control output and the second control output.

Further, the invention pertains to a control system having a control unit on which a Two Degree of Freedom controller is implemented, for controlling an output of a technical system to a predefined setpoint.

Background

Various technical applications are known, where a technical system has to be controlled by means of a controller. Examples of technical systems requiring control are industrial robots with a robot arm whose movement needs to be controlled, long stator linear motors where the movements of shuttles need to be controlled, or engine testbeds, where torques produced by a dynamometer or by a device under test (e.g., an internal combustion engine) demand control, etc. Typically, the goal set out in a control problem is to control an output of a technical system to a predefined reference value (e.g., a demanded torque, a demanded speed / position profile, a demanded pressure, etc.).

In cases as the ones referred to above, a broad range of aspects has to be taken into account when designing and/or parameterizing a controller, including static and/or dynamic behavior of a system to be controlled, potential modifications of the system, disturbances acting on the system, etc. Only correctly tuned controllers are able to adequately and satisfyingly control a technical system over its entire operating range, especially with respect to a resulting dynamical or steady-state control error, or with respect to the dynamics of a resulting closed control loop, to stability, controllability, or another control metric etc. Moreover, in practice, many systems behave nonlinearly and vary with time, rendering controller design and/or parameterization a difficult task. Therefore, in a first step, often only a structure of a controller (controller structure) is provided when designing a controller for a given technical system, which structure is then, in a second step, parameterized (assigning values to the controller parameters used in the structure), by tuning said controller parameters in order to achieve a desired (closed loop) control behavior. Tuning parameter values in said second step allows to react to priorly unknown nonlinearities and variations of a system. However, the tuning of controller parameters frequently proves to be complex and difficult, even in cases where simple controller structures are used, e.g., PI-controllers or PID-controllers or sliding-mode controllers, due to said nonlinearities of a system, or due to said time variant behavior, but also due to disturbances etc. Therefore, trained and experienced experts are typically required to successfully parameterize a controller.

Said aspects are especially true for Two Degree of Freedom (2DoF) controllers, which are known from, e.g., CN 114779648 A. 2DoF-controllers typically comprise a feedforward part providing a first control output and a feedback part providing a second control output, the feedback part computing said second control output from a control error representative of a deviation between an output of a technical system to be controlled and a predefined setpoint. 2DoF-controllers are well suited for many applications, due to good reference tracking performance and robust disturbance rejection. In cases of appropriate parametrization of especially the feed-forward path, the feed-forward path carries out most of the control work, leaving only little work to the feedback part.

However, a frequently encountered problem with 2DoF-controllers results from the fact that this type of controller typically uses an inverse of the system to be controlled in the feedforward part, inverting a desired set point into a control signal, i.e., into said first control output, making sure that the set point is achieved with only little contribution from the feedback part. In case the system to be controlled changes, e.g., due to disturbances acting on the system, or due to modifications of the system caused by wear or aging, or due to the impact of nonlinearities, an inverse model used in a feed forward path may deviate from an actual, i.e., from a correct, inverse of a system at a given point in time, leading to wrong control actions by the feed forward path, requiring the feedback part to do more work than planned and expected. This can deteriorate the performance of a technical system controlled by a 2DoF-controller, potentially leading to reduced control accuracy, reduced robustness, and even endanger a system to be controlled.

Summary

It is therefore an object of the present invention to provide a method for controlling a technical system by means of a Two Degree of Freedom controller, which method allows for increased accuracy, higher robustness, and better safety even in cases of changes of the system to be controlled.

This object, for the method mentioned at the outset, is achieved in that, at an anomaly detection time point during control of the output of the technical system, an anomaly detection signal is derived from the control error present at said anomaly detection time point, in that at least one control parameter of the multiple of control parameters parametrizing the Two Degree of Freedom controller is adapted depending on the anomaly detection signal and in that, from the anomaly detection time point onwards, the output of the technical system is controlled by means of the Two Degree of Freedom controller parameterized by said at least one adapted control parameter. Preferably, as discussed above, the feedforward path employs an inverse model of the technical system to compute the first control output from the setpoint. However, the invention allows for flexibility in this regard, i.e., with regards to where said inverse model of the technical system is used, such that the first control output may also be computed outside of the Two Degree of Freedom controller, most preferably by means of an inverse model of the technical system, and may be fed to the Two Degree of Freedom controller as an input and may be simply be passed, i.e., fed forward, on in the feedforward path. The sum-control-variable is preferably computed from the first control output and the second control output by simply summing the first control output and the second control output. However, also in this regard, different approaches may be employed, such as scaling the first control output and/or the second control output with appropriately selected scaling weights before summing them or by filtering the first control output and the second control output before computing the sum-control-variable.

The core idea and/or core insight of the invention is that in case a two-degree-of-freedom controller is used to control a technical system, a control error between the output of the technical system and the predefined setpoint is indicative of a deviation between an assumed model behavior and a real behavior of the real technical system. In case of a (classical) controller that does not comprise a feed-forward path, or at least not an initially correctly parameterized feed-forward path, such a conclusion cannot be drawn. In case of a classical controller, a control error is even necessary to allow for any control action to be generated. Hence, in such a case, a control error does not provide any insight regarding the presence of any sort of anomaly.

Due to said dependency between control errors and anomalies, in case of a two-degree-of-freedom controller, information transported by a control error can be used to react to changes in a technical system to be controlled and hence improve a controller. In particular, a controller and/or a controller's parameters may be adapted, in case a deviation due to an anomaly is detected by analyzing a control error.

In preferred embodiments of the invention, the anomaly detection signal may be derived from the control error as a, preferably scaled, absolute value of the control error or as a, preferably scaled, squared value of the control error or as a, preferably scaled, L-norm of the control error. Depending on the specifics of a given use case, an appropriate norm may thus be used to overcome and optimally deal with potential obstacles present in said specific use case, such as signal noise or dynamic disturbances or systematic disturbances.

To prepare the anomaly detection signal for further signal processing, the anomaly detection signal may also be filtered by means of a predefined filter, preferably a low-pass filter or a band-pass filter or a high-pass filter or a notch filter, before being used to adapt the at least one control parameter of the multiple of control parameters.

To adapt said control parameters in reaction to an identified anomaly, a, preferably static, linear or non-linear function may be provided describing a dependency between the anomaly detection signal and the at least one control parameter of the multiple of control parameters to be adapted. Based on such a linear or non-linear function, said anomaly detection signal may be fed into said linear or non-linear function, computing an adapted control parameter value to adapt and thus update and thus improve the controller. The dependency between anomaly detection signal and control parameter may also be implemented in the form of a dynamical function and thus a dynamical system, e.g., a filter etc., as mentioned above. Moreover, the dependency between anomaly detection signal and control parameter may also comprise specific nonlinearities to fit the needs of a given use case, particularly preferably a dead-zone in order to overcome, e.g., signal noise, where no or only a reduced adaptation is carried out in case the anomaly detection signal lays inside the dead-zone.

The invention also provides for flexibility with regards to how the Two Degree of Freedom controller may be modified based on the anomaly detection signal. Specifically, in further preferred embodiments, a limitation element parameterized by at least one limitation parameter may be provided in the Two Degree of Freedom controller to limit the first control output and/or to limit the second control output and/or to limit the sum-control-variable, the at least one limitation parameter being one of the multiple of control parameters to parametrize the Two Degree of Freedom controller, and the at least one limitation parameter being adapted depending on the anomaly detection signal. Limiting the output of a controller is particularly helpful in cases of anomalies whose root cause is not immediately apparent. In such a case, it is oftentimes reasonable to control more carefully, thus to further limit and reduce the available and hence applied control energy and/or control action, in order to avoid damages. Particularly preferably, the feedback part may solely consist of a proportional controller, having no integral part. Omitting an integral part avoids potential problems with the well-known phenomenon of controller wind-up, especially in case a limitation parameter is modified, especially reduced.

In the embodiments laid out above, the adaptation of the at least one control parameter of the multiple of control parameters may only be carried out in case an absolute value of the anomaly detection signal surpasses a predefined anomaly-threshold, making sure that an adaption, e.g. a reduction of an absolute value of the at least one control parameter of the multiple of control parameters of the two-degree-of-freedom controller, is only carried out in cases of significant deviations and anomalies, hence avoiding constant and thus useless adaptions due to, e.g., signal noise.

Moreover, not only with regards to implementation specifics, but also with regards to the systems that the method is applied to, the invention allows for flexibility. Hence, a planar motor may be controlled as the technical system or a long stator linear motor may be controlled as the technical system or an industrial robot may be controlled as the technical system or a tool machine may be controlled as the technical system. In case an industrial robot is controlled as the technical system, a detected anomaly may particularly be indicative of a collision of the robot with a mechanical object.

Besides the method outlined above, the object mentioned at the outset is achieved by a control system having a control unit on which a Two Degree of Freedom controller is implemented for controlling an output of a technical system to a predefined setpoint, the control unit being capable of carrying out the method according to the invention explained above.

Detailed description

The present invention is described below in greater detail with reference to Figs.1 to 7, which show schematic and non-limiting advantageous embodiments of the invention by way of example. In the drawings:

Fig.1 shows the known structure of a 2DoF controller,

Fig.2 shows a measured 2DoF control signal,

Figs.3a-b shows control error signals, an anomaly threshold and an anomaly detection signal obtainable with the invention,

Fig.4 shows a first implementation of a 2DoF controller,

Fig.5 shows a second implementation of a 2DoF controller,

Fig.6 shows a first implementation of the invention based on an adapted limitation value,

Fig.7 shows a second implementation of the invention based on adapted limitation values.

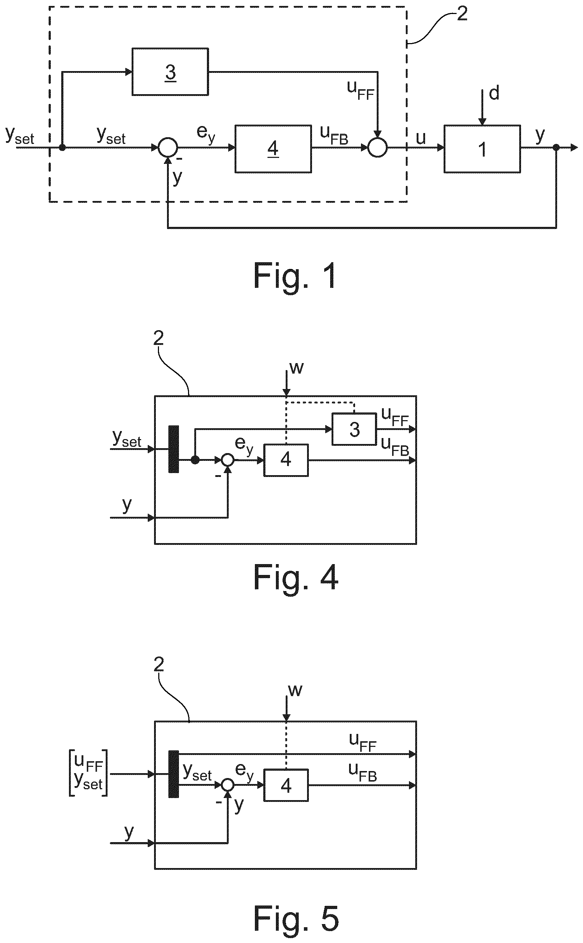

In Fig.1, the general and well-known structure of a Two Degree of Freedom ("2DoF", 2DoF and "Two Degree of Freedom" are used synonymously hereafter) controller 2 for controlling a technical system 1 is shown. The Two Degree of Freedom controller 2 comprises a feedforward part 3 and a feedback part 4. As it is often impossible to achieve good setpoint tracking and fast disturbance rejection at the same time with ordinary feedback controllers having only one degree of freedom (e.g., classical P-, PI-, PID-controllers etc.), a Two Degree of Freedom (2DoF) controller 2 with two degrees of freedom as shown in Fig.1 can be used. The technical system 1 is, for example, a mechanical system, driven by a sum-control-variable u, providing an actual position as an output y, which is preferably measured by an encoder, for example. More specifically, a planar motor PM or a long stator linear motor LLM or an industrial robot or a delta robot or a tool machine may be controlled as a technical system 1. Depending on the specifics of the technical system 1, said sum-control-variable u may be fed to an actuator, e.g., an amplifier or a power amplifier or a frequency converter or a servo drive etc., which actuator eventually acts on the technical system 1 in accordance with the sum-control-variable u. A skilled person familiar with a technical system 1 to be controlled of course knows which actuator best fits a specific use case. However, a sum-control-variable u may also act directly on a technical system 1 to be controlled.

The aim of the Two Degree of Freedom controller shown is to control an output y of the shown technical system 1 to a predefined setpoint $y_{set}$. As is well-known from control engineering, said feedforward part 3 and said feedback part 4 typically comprise parameters, such as a proportional gain $k_p$ in a proportional path or an integral gain ki of an integral path or gains of an Anti-Windup scheme, e.g. of an Anti-Windup scheme in the sense of Hanus (cf. Hanus, Raymond, Michel Kinnaert, and J-L. Henrotte. "Conditioning technique, a general anti-windup and bumpless transfer method." Automatica 23.6 (1987): 729-739.) in the feedback part 4, or a feed-forward gain in the feedforward part 3, or a limitation value $u_{max}$ to limit at least one, potentially also more of the control signals computed in the controller 2.

As it is typically the case in control engineering practice, the feedback part 4 is designed to compute said second control output $u_{FB}$ from a control error $e_y$ representative of a deviation between the output y of the technical system 1 and the predefined setpoint $y_{set}$, and the Two Degree of Freedom controller 2 is designed to eventually determine a sum-control-variable u acting on the technical system 1 to control the output y to the setpoint $y_{set}$ from the first control output $u_{FF}$ and the second control output $u_{FB}$. As can be seen from Fig.1, the sum-control-variable u is computed from the first control output $u_{FF}$ and the second control output $u_{FB}$ by summing the first control output $u_{FF}$ and the second control output uFB. In the case of a mechanical system as technical system 1, the sum-control-variable u may correspond to a torque or to a force.

The controller design is usually carried out by means of a (mathematical) model of the technical system 1 that comprises also certain state variables $x_i$ (i representing an index, as is well-known in control engineering). The model of the technical system 1 maps the input (control variable u) onto the output y. There can of course also be more than just one output variable y. State variables $x_i$ are typically stacked into state-vector x with dimension nd$\geq$1, n describing the dimension of the system 1. The 2DoF controller 2 oftentimes additionally utilizes certain state variables $x_i$ of the technical system 1, e.g. an engine speed n in case of an engine as technical system 1 to be controlled. State variables $x_i$ can be measured by using appropriate sensors or encoders, or can be calculated by using a simulation model, or can be estimated with an observer for the state variable $x_i$ from other known (e.g. measured) variables of the technical system 1, such as from an output y.

As is also well-known from the prior art, the feedforward part 3 may encompass an inverse of the technical system 1 to be controlled, i.e. an inverse of the model of the technical system 1. By means of an inverse model of the technical system 1, it becomes possible to compute a control variable $u_{FF}$ from a desired setpoint $y_{set}$ in the feedforward part 3, which, in an ideal scenario without disturbances d and deviations of the real behaviour of the system 1 from an assumed behaviour, already alone allows to solve the control objective, i.e., to control the output y to the setpoint $y_{set}$. However, the dynamics of a technical system 1 is oftentimes nonlinear and time variant. Thus, it is frequently difficult to determine the inverse of a nonlinear technical system model, making the implementation of the feedforward part 3 of a 2DoF controller 2 a challenging task.

To account for these considerations, in the case shown in Fig.1, it is assumed that a disturbance d acts on the technical system 1, which must be compensated by the controller, and which may lead to a deviation of the real behaviour of the technical system 1 from an assumed behaviour, which assumed behaviour may be reflected in a mathematical model of the technical system 1. In an ideal case without disturbances (d = 0), in which the model parameters are identical to the real system parameters, u = $u_{FF}$ already by itself forms a control signal that leads to y = $y_{set}$. In this ideal case (feedforward part 3 is the inverse of the real, acting system), the feeback part 4 has nothing to do (open-loop operation).

The feedback part 4, may solely consist of a proportional controller $k_p * e_y$, having no integral part, which allows to avoid issues that could potentially be connected the phenomenon of windup. As will be explained later, this aspect is particularly advantageous within the scope of this invention, as it avoids potential issues related to the well-known phenomenon of wind-up, see above. However, also other control architectures are conceivable for the feedback part 4, such as PI-controllers or PID-controllers or sliding-mode controllers etc.

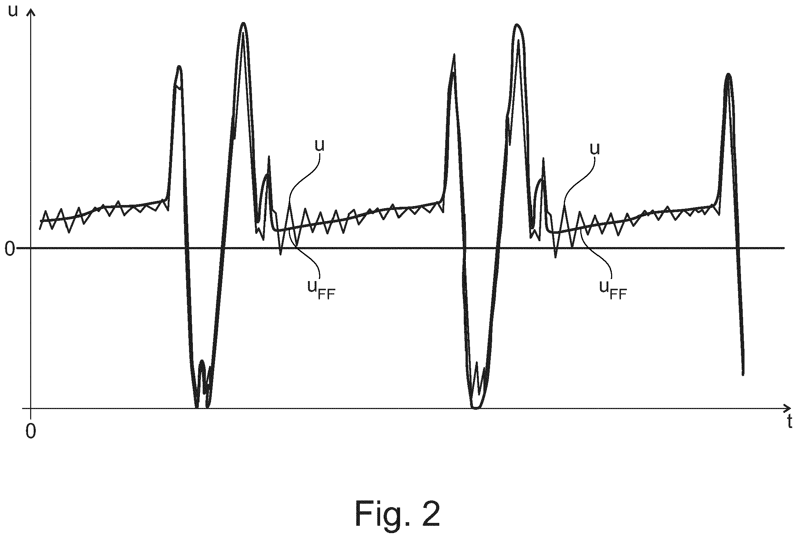

Fig.2 shows a measured 2DoF control signal, i.e. a sum-control-variable u, in the case of a mechanical system as technical system 1 to be controlled, specifically an axis of an industrial robot. In case of said robot, a set torque and a set position for the robot arm are calculated centrally on a central computing unit, which may be implemented in the form of a PLC, and are transferred via a field bus system, e.g., Ethernet or Ethercat or Ethernet Powerlink or Profibus etc., to specific control units on which control structures as the one shown in Fig.1 are implemented to carry out the control for a specific arm. In the scope of the present invention, a control unit running a 2DoF controller 2 as shown in Fig.1 may be implemented in the form of FPGA, a microcontroller etc.

As can be seen from Fig.2, in case the controller parameters are selected appropriately, the first control output $u_{FF}$ generated by the feedforward part 3 and the sum-control-variable u eventually output by the controller 2 are highly alike. As mentioned previously, the deviation between the sum-control-variable u and the first control output $u_{FF}$ generated by the feedforward part 3 can be interpreted as a proportion of the control signal that the feedback part 4 still needs to apply in order to solve the control objective with sufficient accuracy. Ideally, the deviation is around zero and essentially consists of oscillations due to the control behavior or due to model deviations or due to disturbances d that cannot be taken into account when setting up a model. In an ideal scenario, without disturbances d and a perfect model of the technical system 1, thus a perfect inverse model used in the feedforward part 3, already the feedback part 3 alone would solve the control task. Hence, the deviation between the first control output $u_{FF}$ and the sum-control-variable u, which corresponds to the control error $e_y$, can be interpreted as a measure of model inaccuracies and/or disturbances. Inaccuracies, disturbances and other effects that lead to deviations from an ideal model behaviour are subsumed hereafter as "anomalies". In case the inaccuracies become too large, the controller 2 may not function properly anymore. Thus, the invention provides for a method that allows to react to said anomalies leading to modifications of the technical system 1 and hence to said inaccuracies.

To that end, within the scope of the invention, it is provided to, at an anomaly detection time point $t_w$ during control of the output y of the technical system 1, derive an anomaly detection signal w from the control error $e_y$ present at said anomaly detection time point $t_w$, to adapt at least one control parameter of the multiple of control parameters $k_p$, $k_i$, $u_{max}$ parametrizing the Two Degree of Freedom controller 2 depending on the anomaly detection signal w and to, from the anomaly detection time point $t_w$ onwards, control the output y of the technical system 1 is by means of the Two Degree of Freedom controller 2 parameterized by said at least one adapted control parameter $k_p$, $k_i$, $u_{max}$. The invention thus allows for a relatively simple way of detecting an anomaly and reacting to it accordingly (actively or proactively).

In course of the invention, it was found that in case a two-degree-of-freedom controller is used, the control error is indicative of a deviation between the assumed model behavior and the behavior of the real technical system. In case of a (classical) controller that does not comprise a feed-forward path, such a conclusion cannot be drawn. In case of a classical controller, a control error is necessary, in order to allow for any control input to be generated. Hence, in such a case, a control error does not provide any insight regarding the presence of any kind of anomaly.

As it is typically the case in modern control engineering, the Two Degree of Freedom controller 2 may be implemented as a discrete-time Two Degree of Freedom controller 2, the control outputs $u_{FB}$, $u_{FF}$ being ongoingly computed at equidistantly spaced discrete control time points $t_k$, typically spaced by a constant, predefined sampling time $T_d$ of, e.g., $T_d=10\mu s$ or $T_d=100\mu s$ or $T_d=1ms$ or $T_d=10ms$ etc., the anomaly detection signal w being ongoingly computed at equidistantly spaced discrete detection time points $t_w$. Beneficially, the discrete control time points $t_k$ and the detection time points $t_w$ may coincide.

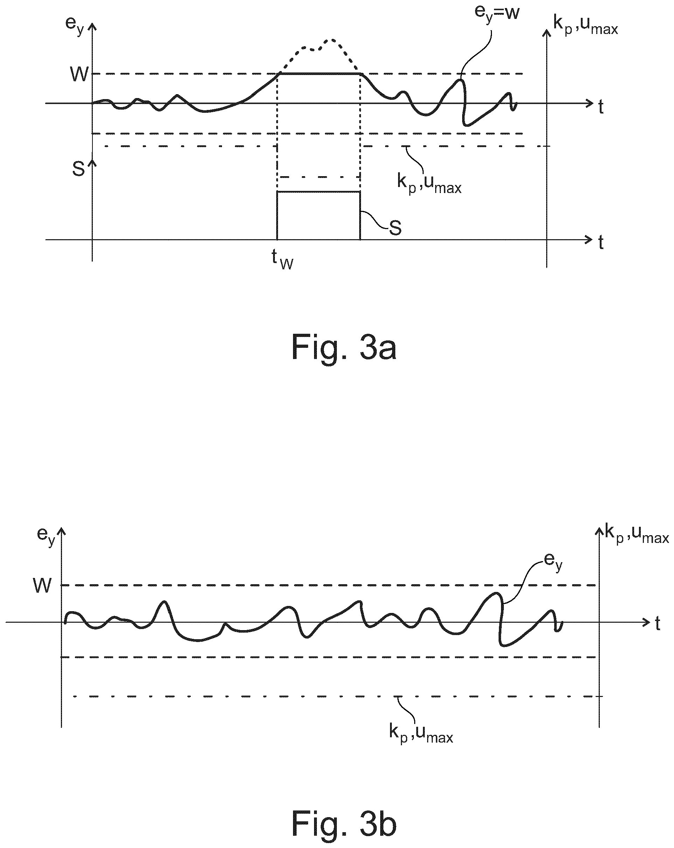

To allow for a more detailed discussion of the invention, Figs.3a-b each show control error signal $e_y$, an anomaly threshold Wand an anomaly detection signal w obtainable by means of the invention. An anomaly threshold W may in particular be provided to carry out the adaptation of the at least one control parameter of the multiple of control parameters $k_p$, $k_i$, $u_{max}$ only in case the absolute value of the control error $e_y$ surpasses a predefined anomaly-threshold W. As can be seen in Fig.3a, the anomaly detection signal w is set equal to the control error $e_y$. However, also other design options for deriving the anomaly detection signal w exist, which will be explained later. At the anomaly detection time point tw, the detection signal w exceeds said predefined anomaly-threshold W, which is additionally emphasized by the status signal s.

As can further be seen in Fig.3a, a control parameter to be adapted, in Fig.3a indicated by parameters $k_p$ and $u_{max}$, is reduced as long as the anomaly-threshold W is exceeded. Reducing a control parameter is particularly preferable. An important reason therefor is that an anomaly indicates some sort of deviation from an assumed model behavior. Hence, in order to reduce the risk of problems that might result from such deviations, such as a potential loss of stability, reducing control parameters allows to increase, for instance a stability margin, and thus make the operation safer again. Reducing the control parameters allows to refuse the controller as a whole.

Speaking again in general terms, to detect an anomaly, a non-linear function may be provided to arrive at the anomaly detection signal w:

$$w = f(y_{set}, \dot{y}_{set}, \ddot{y}_{set}, u_{FF}, \dot{u}_{FF}, \ddot{u}_{FF}, y, \dot{y}, \ddot{y}, \dots)$$

In the simplest case, the deviation of the actual output y from the target setpoint yset can be used directly for this purpose:

$$w := e = y_{set} - y$$

If the signal quality allows it, higher derivatives of the variables mentioned can also be included:

$$w = k_1(y_{set} - y) + k_2 \frac{d}{dt}(y_{set} - y) + k_3 \frac{d^2}{dt^2}(y_{set} - y) + \cdots$$

As indicated by the formula above, a control error ey = yset-y and its derivations may of course also be scaled by appropriate scaling weights. Hence, the anomaly detection signal w may be derived from the control error ey as a, preferably scaled, absolute value |e| of the control error ey or as a, preferably scaled, squared value e^2 of the control error ey or as a, preferably scaled, L-norm L(e) of the control error ey, hence allowing for great flexibility, especially when it comes to fine tune the invention to a specific practical use case.

With regards to the dependency between the anomaly value and the at least one control parameter, a linear or non-linear function is provided to describe a dependency between the anomaly detection signal w and the at least one control parameter of the multiple of control parameters kp, ki, umax. However, different approaches are conceivable in this regard. For instance, the sum-control-variable u may also be frozen to a pre-defined value in case said anomaly-threshold W is exceeded, hence effectively deactivating the 2DoF controller 2.

In the cases referred to above, the differentiating behavior can increase sensitivity and lead to a faster reaction in the status formation described below. The f(...) function can also have an additional filtering effect in the case of noisy signals. The specified deviation can also be used to create a status signal s, as already indicated in Fig.3a:

$$s = \begin{cases} 1, & |e| > W \\ 0, & otherwise \end{cases}$$

It is also conceivable to make the threshold W asymmetrical (using two values (W1, W2)) or variable in time (W1(t), W2(t)), in order to be able to adapt the detection even more individually.

As mentioned at the outset, a planar motor PM or a long stator linear motor LLM or an industrial robot, especially in the form of a delta robot, may be controlled as the technical system 1. The application may be used wherever electrically driven axes come into contact with other machine parts, e.g., in case of packaging machines, robotics, planar motors (PM), long stator linear motors (LLMs), etc. In case an industrial robot is controlled as the technical system 1, a detected anomaly may in particular be indicative of a collision of the robot with a mechanical object. By applying the teachings of the invention, many types of anomalies can be detected, even unexpected unstable behavior, resulting from changes in the plant causing instability. Regardless of whether this is a disturbance from outside or a parameter variation of the controlled system (change in the mechanics). Specifically, collisions can be detected at an early stage. In the event of a collision, the control error $e_y$ and hence the anomaly detection signal w will increase abruptly. This change of state will be detected and the control action will be restricted in accordance with the parameterization.

Specifically, in the case of an industrial robot, by means of the invention, a detection of the loss of an arm in a tripod can be detected, or an incorrect parameterization may be detected as an anomaly, or an incorrectly parameterized tool may be detected, or mechanical changes over time (friction, bearing damage, looseness, ...) may be detected, but also changes in a drivetrain (e.g., belt wear, blockage, slipping clutches, etc.) may be detected, indicating when model parameters should be adjusted (running-in behavior of the mechanics, temperature influence, process change, etc.).

Depending on the operating mode (centralized, decentralized), also other versions of a 2 DoF controller 2 are conceivable, particularly as shown in Figs.4 and 5. Specifically, as shown in Fig.4, in the case of decentralized control (single-axis operation), the feedforward control $u_{FF}$ is determined from the setpoint $y_{set}$, in the controller 2 itself. However, in case of centralized control (as it is typical when operating a group of axis, "axis group"), the feedforward control may also be calculated centrally, i.e., outside of the Two Degree of Freedom controller, hence a tuple $[y_{set}, u_{FF}]$ being fed to the respective drive, as depicted in Fig.5. Therefore, the first control output $u_{FF}$ may be computed outside of the Two Degree of Freedom controller 2, preferably by means of an inverse model of the technical system 1, fed to the Two Degree of Freedom controller 2 as an input and processed forward by the feedforward path 3, or the feedforward path 3 may use an inverse model of the technical system 1 to compute said first control output $u_{FF}$ from the setpoint yset.

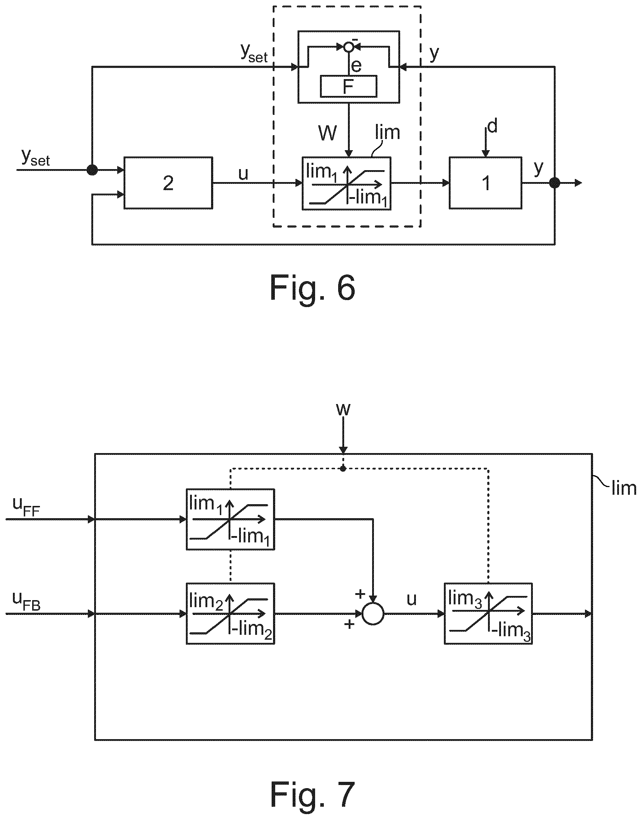

Fig.6 further shows a possible implementation of the invention based on an adapted limitation value. The limitation can be carried out in the feedforward branch, in the feedback branch, but can also act on entire manipulated variable, i.e., the sum-control-variable u. However, also other options to implement a limitation are conceivable (symmetrical, asymmetrical, time-dependent, process-dependent, ...).

Moreover, as depicted in Fig.6 as well, the anomaly detection signal w may, in a preferred manner, be filtered by means of a predefined filter F, preferably a low-pass filter or a band-pass filter or a high-pass filter or a notch filter, before being used to adapt the at least one control parameter of the multiple of control parameters $k_p$, $k_i$, $u_{max}$.

As also shown in Fig.6, after the filter F, the anomaly value is connected to a limitation element lim. To implement the invention, a limitation element lim as the one shown in Fig.6 parameterized by at least one limitation parameter lim1 may be provided in the Two Degree of Freedom controller 2 to limit the first control output $u_{FF}$ and/or to limit the second control output $u_{FB}$ and/or to limit the sum-control-variable u, such that the at least one limitation parameter $u_{lim}$ may be considered as one of the by a multiple of control parameters $k_p$, $k_i$, $u_{max}$ to parametrize the Two Degree of Freedom controller 2, and the at least one limitation parameter $u_{lim}$ is adapted depending on the anomaly detection signal w.

A second implementation of the invention based on adapted limitation values is presented in Fig.7.In both cases shown in Fig.6 and 7, a conceivable approach to implement the invention is to provide for a first, regular value of said limitation values lim1, lim2, lim3, in case no anomaly is detected, and for a second set of values, whose absolute value is smaller, for the case that an anomaly is detected and that a reduction is required.


**Claims**

1.   Method for controlling an output (y) of a technical system (1) to a predefined setpoint ($y_{set}$) by means of a Two Degree of Freedom controller (2) having a feedforward part (3) providing a first control output ($u_{FF}$) and a feedback part (4) providing a second control output ($u_{FB}$), the Two Degree of Freedom controller (2) being parametrized by a multiple of control parameters ($k_p$, $k_i$, $u_{max}$), the feedback part (4) computing said second control output ($u_{FB}$) from a control error ($e_y$) representative of a deviation between the output (y) of the technical system (1) and the predefined setpoint ($y_{set}$), a sum-control-variable (u) acting on the technical system (1) to control the output (y) to the setpoint ($y_{set}$) being determined from the first control output ($u_{FF}$) and the second control output ($u_{FB}$), **characterized in that,** at an anomaly detection time point ($t_w$) during control of the output (y) of the technical system (1), an anomaly detection signal (w) is derived from the control error ($e_y$) present at said anomaly detection time point ($t_w$), **in that** at least one control parameter of the multiple of control parameters ($k_p$, $k_i$, $u_{max}$) parametrizing the Two Degree of Freedom controller (2) is adapted depending on the anomaly detection signal (w), **and in that,** from the anomaly detection time point ($t_w$) onwards, the output (y) of the technical system (1) is controlled by means of the Two Degree of Freedom controller (2) parameterized by said at least one adapted control parameter ($k_p$, $k_i$, $u_{max}$).

2. Method according to claim 1, **characterized in that** the feedforward path (3) uses an inverse model of the technical system (1) to compute said first control output ($u_{FF}$) from the setpoint ($y_{set}$).

3. Method according to claim 1, **characterized in that** the first control output ($u_{FF}$) is computed outside of the Two Degree of Freedom controller (2), preferably by means of an inverse model of the technical system (1), fed to the Two Degree of Freedom controller (2) as an input and processed forward by the feedforward path (3).

4. Method according to any one of the preceding claims, **characterized in that** that the sum-control-variable (u) is computed from the first control output ($u_{FF}$) and the second control output ($u_{FB}$) by summing the first control output ($u_{FF}$) and the second control output ($u_{FB}$).

5. Method according to any one of the preceding claims, **characterized in that** the anomaly detection signal (w) is derived from the control error ($e_y$) as a, preferably scaled, absolute value (|e|) of the control error ($e_y$) **or in that** the anomaly detection signal (w) is derived from the control error ($e_y$) as a, preferably scaled, squared value ($e^2$) of the control error ($e_y$) or **in that** the anomaly detection signal (w) is derived from the control error ($e_y$) as a, preferably scaled, L-norm (L(e)) of the control error ($e_y$).

6. Method according to any one of the preceding claims, **characterized in that** the anomaly detection signal (w) is filtered by means of a predefined filter (F), preferably a low-pass filter or a band-pass filter or a high-pass filter or a notch filter, before being used to adapt the at least one control parameter of the multiple of control parameters ($k_p$, $k_i$, $u_{max}$).

7. Method according to any one of the preceding claims, **characterized in that** a linear or non-linear function is provided to describe a dependency between the anomaly detection signal (w) and the at least one control parameter of the multiple of control parameters ($k_p$, $k_i$, $u_{max}$).

8. Method according to any one of the preceding claims, **characterized in that** a limitation element (lim) parameterized by at least one limitation parameter (lim1) is provided in the Two Degree of Freedom controller (2) to limit the first control output ($u_{FF}$) and/or to limit the second control output ($u_{FB}$) and/or to limit the sum-control-variable (u), the at least one limitation parameter ($u_{lim}$) being one of the by a multiple of control parameters ($k_p$, $k_i$, $u_{max}$) to parametrize the Two Degree of Freedom controller (2), **and in that** the at least one limitation parameter ($u_{lim}$) is adapted depending on the anomaly detection signal (w).

9. Method according to any one of the preceding claims, **characterized in that** the Two Degree of Freedom controller (2) is implemented as a discrete-time Two Degree of Freedom controller (2), the control outputs ($u_{FB}$, $u_{FF}$) being ongoingly computed at equidistantly spaced discrete control time points ($t_k$), the anomaly detection signal (w) being ongoingly computed at equidistantly spaced discrete detection time points ($t_w$).

10. Method according to claim 9, **characterized in that** the discrete control time points (tk) and the detection time points ($t_w$) coincide.

11. Method according to any one of the preceding claims, **characterized in that** the adaptation of the at least one control parameter of the multiple of control parameters ($k_p$, $k_i$, $u_{max}$) is carried out in case an absolute value of the anomaly detection signal (w) surpasses a pre-defined anomaly-threshold (W).

12. Method according to claim 11, **characterized in that** an absolute value of the at least one control parameter of the multiple of control parameters ($k_p$, $k_i$, $u_{max}$) is reduced in order to adapt the at least one control parameter of the multiple of control parameters ($k_p$, $k_i$, $u_{max}$) in case the anomaly detection signal (w) surpasses the predefined anomaly-threshold (W).

13. Method according to any one of the preceding claims, **characterized in that** a planar motor (PM) is controlled as the technical system (1) **or in that** a long stator linear motor (LLM) is controlled as the technical system (1) **or in that** an industrial robot is controlled as the technical system (1), the detected anomaly preferably being indicative of a collision of the robot with a static mechanical object, **or in that** a tool machine is controlled as the technical system (1).

14. Method according to any one of the preceding claims, **characterized in that** the feedback part (4) solely consists of a proportional controller ($k_p$), having no integral part.

15. Control system having a control unit on which a Two Degree of Freedom controller (2) is implemented for controlling an output (y) of a technical system (1) to a predefined setpoint ($y_{set}$), the Two Degree of Freedom controller (2) having a feedforward part (3) providing a first control output ($u_{FF}$) and a feedback part (4) providing a second control output ($u_{FB}$), the Two Degree of Freedom controller (2) being parametrized by a multiple of control parameters ($k_p$, $k_i$, $u_{max}$), the feedback part (4) being designed to compute said second control output ($u_{FB}$) from a control error ($e_y$) representative of a deviation between the output (y) of the technical system (1) and the predefined setpoint ($y_{set}$), the Two Degree of Freedom controller (2) further being designed to determine a sum-control-variable (u) acting on the technical system (1) to control the output (y) to the setpoint ($y_{set}$) from the first control output ($u_{FF}$) and the second control output ($u_{FB}$), **characterized in that** the control unit is further designed to, at an anomaly detection time point ($t_W$) during control of the output (y) of the technical system (1), derive an anomaly detection signal (w) from the control error ($e_y$) present at said anomaly detection time point (tw), adapt at least one control parameter of the multiple of control parameters ($k_p$, $k_i$, $u_{max}$) parametrizing the Two Degree of Freedom controller (2) depending on the anomaly detection signal (w) and, from the anomaly detection time point ($t_w$) onwards, control the output (y) of the technical system (1) by means of the Two Degree of Freedom controller (2) parameterized by said at least one adapted control parameter ($k_p$, $k_i$, $u_{max}$).

Fig. 1

Fig. 4

Fig. 5

Fig. 2

Fig. 3a

Fig. 3b

Fig. 6

Fig. 7

# EUROPEAN SEARCH REPORT

Application Number

EP 24 19 2430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2018 092279 A (TADANO LTD) 14 June 2018 (2018-06-14) * paragraphs [0056] - [0070]; figures 6,8 * | 1-15 | INV. G05B13/04 |
| | ----- | | |
| A | EP 3 330 812 A1 (QPUNKT GMBH Q [AT]) 6 June 2018 (2018-06-06) * paragraphs [0008] - [0012]; figure 1 * ----- | 1-15 | |

TECHNICAL FIELDS
SEARCHED      (IPC)

G05B

The present search report has been drawn up for all claims

| Place of search | Date of completion of the search | Examiner |
|---|---|---|
| Munich | 15 January 2025 | Frey, Richard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 2430

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2025

| Patent document cited in search report | | Publication date | Patent family member(s) | Publication date |
|---|---|---|---|---|
| JP 2018092279 | A | 14-06-2018 | NONE | |
| EP 3330812 | A1 | 06-06-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114779648 A

**Non-patent literature cited in the description**

- **HANUS, RAYMOND ; MICHEL KINNAERT ; J-L. HENROTTE**. Conditioning technique, a general anti-windup and bumpless transfer method.. *Automatica*, 1987, vol. 23 (6), 729-739